# EUROPEAN PATENT SPECIFICATION

(11) **EP 0 936 047 B1**
(45) Date of publication and mention of the grant of the patent: **25.09.2002**
(21) Application number: 98105104.8
(22) Date of filing: 20.03.1998
(51) Int. Cl.: B29C 45/28

(54) **Injection molding method, injection mold, and valve gate device**
Spritzgiessverfahren, Spritzgiessform und Vorrichtung mit Ventilanschnitt
Procédé de moulage par injection, moule d'injection et dispositif d'entrée d'injection à valve

(30) Priority: 13.02.1998 JP 3187098
(43) Date of publication of application: 18.08.1999
(73) Proprietor: Mitsubishi Materials Corporation, Chiyoda-ku, Tokyo (JP)
(72) Inventor: Takeda, Yoshinobu, Niigata-shi, Niigata-ken (JP)
(74) Representative: Füchsle, Klaus, Dipl.-Ing.

(56) References cited:
- WO-A-91/18727
- DE-U- 9 003 574
- FR-A- 2 659 048
- US-A- 4 917 594
- PATENT ABSTRACTS OF JAPAN vol. 97, no. 3, 31 March 1997 -& JP 08 300418 A (IKEGAMI KANAGATA KOGYO KK), 19 November 1996
- PATENT ABSTRACTS OF JAPAN vol. 98, no. 5, 30 April 1998 -& JP 10 016005 A (VICTOR CO OF JAPAN LTD), 20 January 1998

## Description

### [Industrial Field of the Invention]

The present invention relates to an injection molding method according to the precharacterising part of claim 1; a valve gate device according to the precharacterising part of claim 2 and an injection mould.

### [Description of the Related Art]

In a known conventional injection mold of this type, a cavity is formed between a stationary mold plate and a movable mold plate, and a valve body with a resin-conveying path which communicates with the aforementioned cavity through a gate is provided within the stationary mold plate. In addition, a movable pin is provided so as to be movable in an axial direction thereof in the resin-conveying path of the valve body, with one end of the movable pin used for opening and closing the gate.

JP-10 016005 A discloses an injection molding system. This device consists of a supporting pin, a ring gate and a heating device arranged on the outer periphery of a nozzle. The one end of the supporting pin corresponds to a groove in a movable mold plate. The supporting pin is fixed by a complicated device.

JP-08 300418 A also discloses an injection molding device including a supporting pin. The device further comprises a resin injection port, a resin passage which communicates with the port and a ring-shaped gate which communicates with the passage and leads molten resin to the cavity. The cavity is formed between a pair of mold plates, wherein one of the mold plates is movable, the other stationary. A sleeve valve is provided to open and close the gate.

FR-A-659 048 discloses an injection molding system which comprises a movable pin with a cavity inside. A cooling tube is disposed inside the cavity and is hollow. The cooling tube is opened at the front end of the movable pin. A cooling fluid can enter the tube through an aperture, flow along the tube and after being redirected at the front end of the pin exit the hollow space of the movable pin through a second aperture. This device does not disclose a configuration comprising a stationary pin.

DE 90 03 574 U discloses a molding system in which the hot melt flows out of a channel and is redirected by a plate and passes by an annular gap to reach a cavity. Side channels may lead additional melt to the cavity. A closing device comprising a cooling means is provided.

US-A-4 917 594 discloses an injection molding system with gas flow through a valve gate. This device comprises a hollow valve member and an elongated steel pin extending through the hollow valve member. The steel pin is stationary fastened and the hollow valve member is movable. The front end of the pin is received in the gate with a space there around which provides a stream of melt with a hollow center flowing into the cavity. Pressurized gas can be conveyed through the hollow pin and flows through the outlet into the hollow center of the stream of melt flowing into the cavity.

WO 91 18 727 A which forms the preamble of the independent claims 1 and 2 discloses an injection molding arrangement comprising a cavity between a pair of mold plates, one of them stationary, the other one movable, and a valve gate device. The valve gate device itself comprises a valve body having a resin conveying path which communicates with the cavity through the gate, a cylindrical movable pin for opening and closing the valve gate and a supporting pin which supports the cylindrical movable pin. The position of the supporting pin is fixed and the supporting pin is attached to the housing.

### [Problem to be Solved by the Invention]

In the aforementioned conventional injection mold, in order to supply a larger amount of resin into the cavity, or to supply the resin into the cavity with a greater speed, the diameter of the gate is increased. However, when the diameter of the gate is increased, and an attempt is made to close the large-diameter gate with the aforementioned movable pin, the resin offers a large resistance to the movable pin, which prevents the gate from being easily closed.

In view of the above-described problem, it is an object of the present invention to provide an injection molding method, an injection mold, and a valve gate device, wherein the movable pin moves easily, without excess force being exerted thereto, so that it properly opens and closes the gate.

### [Means for Solving the Problem]

This object is solved by an injection molding method according to claim 1, a valve gate device according to claim 2 and an injection mold according to claim 5. Preferred embodiments of the valve gate device are disclosed in claims 3 and 4.

Closing the gate with a cylindrical movable pin causes excess resin to easily return back towards the resin-conveying path through the outer edge portion at one end of the supporting pin. Therefore, even a large-diameter gate can be reliably closed by the movable pin which moves easily due to reduced resin resistance on the movable pin.

Opening and closing the gate with a cylindrical movable pin being supported and guided by the supporting pin reduces the resin resistance on the movable pin, making it easier to open and close the gate and allows the movement of the movable pin to be stabilized.

When the pin (core pin) opposing the supporting pin is placed at the movable mold side, the biasing means allows both pins to easily and closely abut against each other.

Cooling the supporting pin by a cooling means reliably prevents overheating of the supporting pin.

### [Brief Description of the Drawings]

### [Fig. 1]

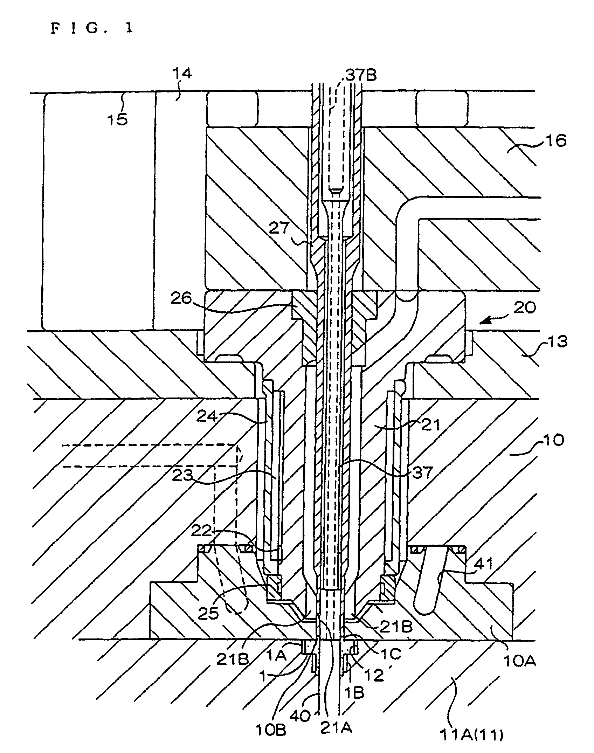

Fig. 1 is a sectional view of the main portion of an injection mold.

### [Fig. 2]

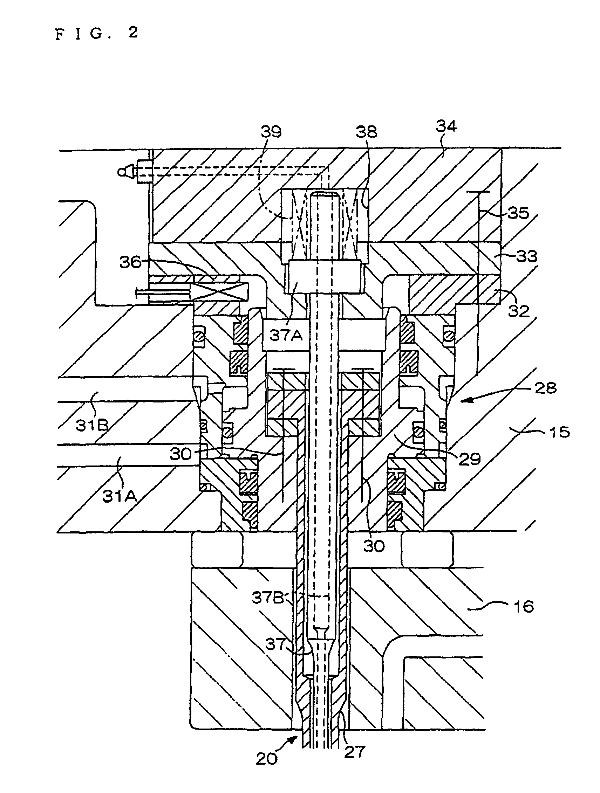

Fig. 2 is a sectional view showing the stationary mounting plate (injection machine) side of Fig. 1.

### [Fig. 3]

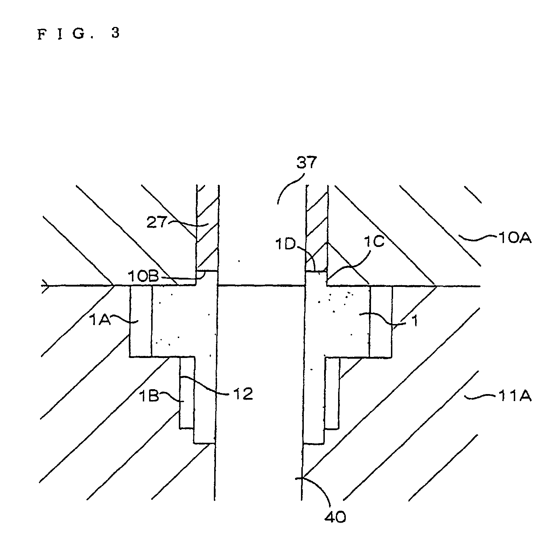

Fig. 3 is a sectional view of the cavity portion.

### [Description of the Embodiment]

A description will now be given of an embodiment of the present invention with reference to the drawings.

Fig. 1 is a sectional view of the main portion of a hot-runner mold; Fig. 2 is a sectional view showing the stationary mounting plate (injection machine) side of Fig. 1; and Fig. 3 is a sectional view of the cavity portion. The injection mold is used for molding resin into a hollow gear 1 having a pair of gear portions, a large gear portion 1A and a small gear portion 1B, both of which are shown in Figs. 1 and 3.

In Fig. 1, reference numeral 10 denotes a stationary mold plate. A movable mold plate 11 is provided so that it can move freely towards and away from the stationary mold plate 10. Inserts 10A and 11A are provided at the mold plates 10 and 11, respectively. A cavity 12 is formed between the inserts 10A and 11A for producing the aforementioned gear 1 by molding. A stationary support plate 13 and a stationary mounting plate 15 are mounted to the aforementioned stationary mold plate 10, with the stationary mounting plate 15 being mounted through a spacer block 14. A manifold 16 is disposed between the stationary support plate 13 and the stationary mounting plate 15. A valve body 21 of a valve gate device 20 is provided within the stationary mold plate 10, the insert 10A, and the stationary support plate 13. A temperature sensor 22 and a heater 23 are provided at the outer periphery of one end of the valve body 21. A heater cover 24 is provided at the outer periphery of the heater 23, and a seal ring 25 is provided at the one end of the valve body 21. In the interior of the one end of the valve body 21 are provided four resin-conveying paths 21B at equal intervals at an inner peripheral wall 21A defining a circular through hole. Molten resin is supplied to the cavity 12 by allowing it to pass through a sprue bush (not shown), a manifold 16, the valve body 21, and then into a gate 10B formed at the insert 10A.

A closing member 26 is internally provided in the upper portion of the valve body 21. A movable pin 27, being supported and guided by the inner portion of the closing member 26 and the inner peripheral wall 21A in the one end of the valve body 21, is capable of sliding along an axial line thereof. The manifold 16 and the stationary mounting plate 15 are inserted into the base end side of the movable pin 27. The base end portion of the movable pin 27 is mounted to a piston 29 of a fluid pressure cylinder 28, provided within the stationary mounting plate 15, by a mounting bolt 30. A fluid is supplied to the fluid pressure cylinder 28 through two fluid paths 31A and 31B that are formed in the stationary mounting plate 15, whereby the piston 29 is moved along with the movable pin 27. First, second, and third mounting members 32, 33, and 34 are mounted to the stationary mounting plate 15 by a mounting bolt 35 in order to affix the fluid pressure cylinder 28. A proximity switch 36 is provided at the first mounting member 32 in order to detect any movement of the piston 29. A supporting pin 37 is provided in the movable pin 27 so as to be freely movable along an axial line thereof, with the base end portion of the supporting pin 37 being disposed in a space 38, defined by the second and third mounting members 33 and 34. A spring (biasing means) 39 that biases the supporting pin 37 towards one end is provided between a flange portion 37A, at the base end portion of the supporting pin 37, disposed in the space 38, and the third mounting member 34. A center hole 37B is formed in the supporting pin 37. The end portion of the supporting pin 37 is cooled by supplying compressive air to the end side of the supporting pin 37 through the center hole 37B. The supporting pin 37 may be cooled by air, using a heat pipe, etc. When a heat pipe is used, or when the inside of the supporting pin 37 can be formed into a double path structure to circulate compressive air, the end of the center hole 37B in the supporting pin 37 is closed.

The gear 1 formed in the cavity 12 has an annular protrusion 1C at the side face located towards the large gear portion 1A. A side face 1D of the protrusion 1C is formed by molding by the end face of the movable pin 27. The side face 1D is the gate face. The inner peripheral surface of the gear 1 is formed by molding by a core pin 40, provided at the movable mold plate 11, and the supporting pin 37. Reference numeral 41 denotes a cooling path for cooling the insert 10A.

In the injection mold having the above-described structure, the fluid pressure cylinder 28 is operated in order to move the movable pin 27 along the axial line thereof such that the end of the movable pin 27 opens and closes the gate 10B of the insert 10A.

In this case, the movable 27 moves while being supported and guided by the supporting pin 37, so that easy movement of the movable pin 27 can be ensured. In addition, since the movable pin 27 closes the annular gate 10B, allowing excess resin which cannot be conveyed into the cavity 12 to easily return back from the outer edge portion at the front end of the movable pin 27 to where resin is allowed to accumulate in the valve body 21, the gate 10B can be easily closed as a result of reduced resin resistance on the movable pin 27. Therefore, a high quality molded product can be produced within the cavity 12. When the mold is closed, the supporting pin 37 and the core pin 40 abut against each other. In this case, the supporting pin 37 is biased by the spring 39. Thus, even if the pins 37 and 40 are made to abut against each other with too large a force, the shock produced thereby is absorbed by the spring 39, thereby preventing the pins 37 and 40 from becoming damaged. In addition, while the pins 37 and 40 are abutted against each other, the spring 39 biases the supporting pin 37 towards the core pin 40 at all times, so that the pins 37 and 40 are in close contact with each other, with no gap formed therebetween. Consequently, no burrs or the like are produced in the molded product, since no resin enters from between the pins 37 and 40. On the other hand, when the core pin 40 separates from the supporting pin 37, causing the mold to open, the supporting pin 37 can be efficiently cooled by ejecting compressive air from the end of the supporting pin 37 through the center hole 37B formed in the supporting pin 37.

In the present embodiment, the cylindrical movable pin 27 and the circular gate 10B were used in combination to produce the cylindrical gear 1 by molding. However, the present invention is not limited thereto. Various modifications can be made in the shape of the end surface of the movable pin so as to correspond to various gate shapes.

### [Advantages]

As can be understood from the foregoing description, closing the gate with a cylindrical movable pin causes excess resin to easily return back towards the resin-conveying path through the outer edge portion at the end of the supporting pin. Therefore, even a large-diameter gate can be reliably closed by the movable pin which is easily moved due to a reduced resistance on the movable pin. Consequently, it is possible to significantly increase the amount of resin that can be supplied to the cavity as well as the speed with which the resin can be supplied to the cavity. In addition, the gate can be easily closed, ensuring production of a high-quality molded product.

Opening and closing the gate by a movable pin, being supported and guided by the supporting pin, allows stable movement of the movable pin, reduces the resin resistance on the movable pin to allow easy movement of the movable pin. Consequently, the movable pin allows easy and reliable opening and closing of the gate.

Opening and closing the gate with a cylindrical movable pin being supported and guided by the supporting pin reduces the resin resistance on the movable pin, making it easier to open and close the gate. Therefore, even when the gate is one having a large diameter, the resin resistance on the movable pin is small, thereby reliably allowing the movable pin to move in order to close the gate.

When the pin (core pin) opposing the supporting pin is placed at the movable mold side, the biasing means allows both pins to easily and closely abut against each other. Therefore, a high-quality molded product can be easily produced by molding.

Cooling the supporting pin by a cooling means reliably prevents overheating of the supporting pin.

## Claims

1. An injection molding method for producing a molded product by supplying resin into a cavity (12), formed between a pair of mold plates (10, 11), through a gate, wherein after supplying the resin into the cavity (12), with one end of a supporting pin (37) facing the center portion of the gate, the gate is closed by a cylindrical movable pin (27) disposed around the supporting pin (37) in order to form the molded product in the cavity (12);
**characterized in that** the supporting pin (37) is biased towards said one end by a biasing means (39).

2. A valve gate device (20) for use in an injection mold having a cavity (12) between a pair of mold plates (10, 11) in order to supply resin into the cavity through a gate, said valve gate device (20)comprising a valve body (21) having a resin-conveying path which communicates with the cavity (12)through said gate; a supporting pin (37) having one end thereof facing the center portion of said gate; and a cylindrical movable pin (27) for opening and closing said gate, which is provided around said supporting pin (37) so as to be movable along an axial line of said movable pin (27),
**characterized in that** a biasing means (39)is provided to bias said supporting pin (37) towards said one end side.

3. A valve gate device according to claim 2, wherein the biasing means is a spring (39) provided between the other end of said supporting pin (37) and a mounting member (24).

4. A valve gate device according to claim 2, further comprising a cooling means (37B) provided at said supporting pin (37) for cooling said supporting pin (37).

5. An injection mold comprising a valve gate device (20) according to any one of claims 2 to 4.

## Patentansprüche

1. Spritzgussverfahren zum Herstellen eines gegossenen Produkts durch Zuführen von Harz in einen Hohlraum (12), der zwischen einem Paar von Formplatten (10, 11) gebildet wird, durch ein Gate, wobei ein Ende eines stützenden Stiftes (37) in Richtung auf den mittleren Bereich des Gates gerichtet ist, wobei nach dem Zuführen des Harzes in den Hohlraum (12) das Gate durch einen zylindrischen, bewegbaren Stift (27) geschlossen wird, der um den stützenden Stift (37) angebracht ist, um das gegossene Produkt in dem Hohlraum (12) zu bilden;
**dadurch gekennzeichnet, dass** der stützende Stift (37) in Richtung auf das eine Ende durch ein Vorspannelement (39) vorgespannt ist.

2. Ventilgateeinrichtung (20) zur Verwendung in einer Spritzgussform mit einem Hohlraum (12) zwischen einem Paar von Formplatten (10, 11), um Harz in den Hohlraum durch ein Gate zuzuführen, wobei die Ventilgateeinrichtung (20) einen Ventilkörper (21) mit einem Harz führenden Weg umfasst, der mit dem Hohlraum (12) durch das Gate in Verbindung steht; einen stützenden Stift (37), von dem ein Ende in Richtung auf den mittleren Bereich des Gates gerichtet ist; und einen zylindrischen bewegbaren Stift (27) zum Öffnen und Schließen des Gates, der um den stützenden Stift (37) vorgesehen ist, so dass er entlang einer Axiallinie des bewegbaren Stifts (27) bewegbar ist,
**dadurch gekennzeichnet, dass** eine Vorspanneinrichtung (39) vorgesehen ist, um den stützenden Stift (37) in Richtung auf die eine Endseite vorzuspannen.

3. Ventilgateeinrichtung nach Anspruch 2, wobei die Vorspanneinrichtung eine Feder (39) ist, die zwischen dem anderen Ende des stützenden Stifts (37) und einem Montageelement (24) vorgesehen ist.

4. Ventilgateeinrichtung nach Anspruch 2, weiter umfassend eine kühleinrichtung (37B), die an dem stützenden Stift (37) vorgesehen ist, um den stützenden Stift (37) zu kühlen.

5. Spritzgussform, umfassend eine Ventilgateeinrichtung (20) nach einem der Ansprüche 2 bis 4.

## Revendications

1. Un procédé de moulage par injection pour produire un produit moulé en fournissant de la résine dans une cavité (12), formée entre une paire de plaques formant moule (10, 11), à travers un point d'injection, dans lequel, après avoir fourni la résine dans la cavité (12), avec une extrémité d'une broche de soutien (37) faisant face à la partie centrale du point d'injection, le point d'injection est fermé par une broche cylindrique mobile (27) disposée autour de la broche de soutien (37), afin de former le produit moulé dans la cavité (12) ;
**caractérisé en ce que** la broche de soutien (37) est sollicitée vers ladite une extrémité par un moyen de sollicitation (39).

2. Un dispositif de point d'injection à soupape (20), pour l'utilisation dans un moule pour injection comportant une cavité (12) entre une paire de plaques formant moule (10, 11) afin de fournir de la résine dans la cavité à travers un point d'injection, ledit dispositif de point d'injection à soupape (20) comprenant un corps de soupape (21) ayant un passage d'acheminement de résine, qui communique avec la cavité (12) à travers ledit point d'injection ; une broche de soutien (37) présentant une extrémité de celle-ci faisant face à la partie centrale dudit point d'injection ; et une broche cylindrique mobile (27) pour ouvrir et fermer ledit point d'injection, qui est située autour de ladite broche de soutien (37) afin d'être déplaçable le long d'une ligne axiale de ladite broche mobile (27),
**caractérisé en ce qu'**il est prévu un moyen de sollicitation (39) pour solliciter ladite broche de soutien (37) vers le côté de ladite extrémité.

3. Un dispositif de point d'injection à soupape selon la revendication 2, dans lequel le moyen de sollicitation est un ressort (39) situé entre l'autre extrémité de ladite broche de soutien (37) et un élément de montage (24).

4. Un dispositif de point d'injection à soupape selon la revendication 2, comprenant en outre un moyen de refroidissement (37B), prévu au niveau de ladite broche de soutien (37) afin de refroidir ladite broche de soutien (37).

5. Un moule à injection, comprenant un dispositif de point d'injection à soupape (20) selon l'une quelconque des revendications 2 à 4.
